# EUROPÄISCHE PATENTSCHRIFT

(11) **EP 0 770 232 B1**
(45) Veröffentlichungstag und Bekanntmachung des Hinweises auf die Patenterteilung: **25.03.1998**
(21) Anmeldenummer: 95924174.6
(22) Anmeldetag: 07.07.1995
(51) Int. Cl.: G05B 13/02

(54) **FÜHRUNGSSYSTEM FÜR EINE KRAFTWERKSANLAGE**
GUIDE SYSTEM FOR A POWER STATION
SYSTEME DE GUIDAGE POUR USINE ELECTRIQUE

(30) Priorität: 08.07.1994 DE 4423897
(43) Veröffentlichungstag der Anmeldung: 02.05.1997
(73) Patentinhaber: SIEMENS AKTIENGESELLSCHAFT, 80333 München (DE)
(72) Erfinder: HILLERMEIER, Claus, D-80637 München (DE); HÖHFELD, Markus, D-81373 München (DE); GEBERT, Rudolf, D-90530 Wendelstein (DE); GRÜHN, Michael, D-91056 Erlangen (DE); ZÖRNER, Walter, D-91083 Baiersdorf (DE)
(86) Internationale Anmeldenummer: DE9500875
(87) Internationale Veröffentlichungsnummer: WO9602025

(56) Entgegenhaltungen:
- DE-A- 4 200 260
- PATENT ABSTRACTS OF JAPAN vol. 17 no. 532 (P-1619) ,11.Juni 1993 & JP,A,05 143757 (OMRON CORP.) 11.Juni 1993,

## Beschreibung

Die Erfindung bezieht sich auf ein Führungssystem für eine Kraftwerksanlage mit einer Anzahl von Kraftwerksblöcken.

Beim Betrieb einer Kraftwerksanlage mit einer Anzahl von Kraftwerksblöcken wird üblicherweise jede Komponente anhand von Führungsgröße n gesteuert. Die Führungsgrößen basieren dabei auf anlagenrelevanten Betriebsparametern und sind in der Regel von einer Anzahl von Nebenbedingungen abhängig. Beispielsweise wird eine Kraftwerksanlage mit einer Anzahl von Kraftwerksblöcken gesteuert, indem jedem Kraftwerksblock als Führungsgröße ein Soll-Lastwert zugeführt wird. Als Nebenbedingung muß dann üblicherweise erfüllt sein, daß die Summe aller den Kraftwerksblöcken zugeführten Soll-Lastwerte innerhalb eines Toleranzbereichs gleich einem Gesamt-Soll-Lastwert ist. Dieser wird als Netzanforderung von den Verbrauchern vorgegeben.

Für einen besonders wirtschaftlichen oder besonders effektiven Betrieb einer Kraftwerksanlage kann es dabei erforderlich sein, die zur Steuerung der Komponenten gewählten Führungsgröße n hinsichtlich einer Anzahl von Kriterien zu optimieren. Um beispielsweise eine Kraftwerksanlage mit zwei oder mehr Kraftwerksblöcken, die hinsichtlich Typ oder Wirkung gleichartig oder verschiedenartig sein können, besonders wirtschaftlich und mit besonders hohem Wirkungsgrad betreiben zu können, muß die von der Kraftwerksanlage an die Verbraucher abzugebende Gesamtleistung im Rahmen einer Lastverteilung derart auf die Kraftwerksblöcke aufgeteilt werden, daß der erforderliche Brennstoffverbrauch insgesamt besonders niedrig ist, und/oder daß Heiz- oder Prozeßdampf besonders effektiv auskoppelbar ist. Dazu wird für jeden Kraftwerksblock als Führungsgröße eine Nennlast ermittelt. Jeder Kraftwerksblock wird anhand der für ihn ermittelten Nennlast gesteuert.

Derartige Führungsgrößen zur Steuerung von Kraftwerksblöcken werden üblicherweise durch das Kraftwerks-Bedienungspersonal empirisch ermittelt und sind somit stark von der Erfahrung des Bedienungspersonals abhängig. Bisher existierende automatisierte Systeme zur Ermittlung der Führungsgrößen beruhen aufgrund eines hohen Rechenaufwandes üblicherweise auf einer Linearisierung des funktionalen Zusammenhangs zwischen der vom Kraftwerksblock abgegebenen elektrischen Leistung, der abgegebenen Fernwarmeleistung, dem Prozeßdampf-Massenstrom und der dem Kraftwerksblock zuzuführenden thermischen Leistung, die in der Regel dem Brennstoffverbrauch proportional ist. Aufgrund dieser Linearisierung des funktionalen Zusammenhangs sind die in derartigen Systemen ablaufenden Berechnungsverfahren jedoch ungenau. Zudem ist es in der Regel nicht möglich, bei der Ermittlung der Führungsgrößen einen aktuellen Anlagenzustand, wie beispielsweise Ausfall eines Wärmetauschers, zu berücksichtigen.

Der Erfindung liegt daher die Aufgabe zugrunde, ein Führungssystem für eine Kraftwerksanlage mit einer Anzahl von Kraftwerksblöcken, anzugeben, das besonders günstige Führungsgrößen für jeden Kraftwerksblock zuverlässig ermittelt.

Diese Aufgabe wird erfindungsgemäß gelöst mit einem Rechnerbaustein, der mittels eines Genetischen Algorithmus Führungsgrößen für den oder jeden Kraftwerksblock ermittelt, und mit einem mit dem Rednerbaustein verbundenen Optimierungsmodul, das mit einer Anzahl von neuronalen Netzen verbunden ist, wobei jeder Komponente ein neuronales Netz zugeordnet ist.

Genetische Algorithmen sind in der Druckschrift von J. Heistermann, "Genetische Algorithmen", Teubner Verlag, Stuttgart, 1994, ausführlich beschrieben.

Zweckmäßigerweise bestimmt der Rechnerbaustein als Führungsgröße für jeden Kraftwerksblock für ein vorgebbares Zeitintervall einen Sollwert für dessen Leistungsanteil an einer insgesamt abzudeckenden Nennlast.

Um die Führungsgrößen für jeden Kraftwerksblock besonders genau und mit geringem Rechenaufwand zu ermitteln, umfaßt das Optimierungsmodul vorteilhafterweise zusätzlich zu einer mit den neuronalen Netzen verbundenen Groboptimierungsstufe eine Feinoptimierungsstufe.

In weiterer vorteilhafter Ausgestaltung ist die Feinoptimierungsstufe zur Durchführung einer analytischen Prozeßsimulation ausgelegt. Die Prozeßsimulation kann dabei auch nichtlineare Korrelationen zwischen den von den Kraftwerksblöcken abgegebenen Leistungen und der zuzuführenden thermischen Leistung hinsichtlich des Wirkungsgrads berücksichtigen.

Um den genetischen Algorithmus besonders effektiv bei der Ermittlung der Führungsgrößen einzusetzen, ist zweckmäßigerweise ein separates neuronales Netzwerk zur Generierung von Startwerten für den genetischen Algorithmus vorgesehen. Dieses ermittelt Eingabegrößen für den genetischen Algorithmus unter Berücksichtigung von anlagenrelevantem Wissen. Somit sind Ergebnisse aus vorangegangenen Ermittlungen von Führungsgrößen bei vergleichbaren oder auch bei vom aktuellen Anlagenzustand abweichenden Anlagenzuständen für die Ermittlung der aktuellen Führungsgrößen nutzbar. Dadurch kann der Rechenzeitaufwand für die Ermittlung der Führungsgrößen besonders gering gehalten werden, so daß ein derartiges Führungssystem für eine Kraftwerksanlage besonders flexibel ist.

Die mit der Erfindung erzielten Vorteile bestehen insbesondere darin, daß durch die Verwendung eines Genetischen Algorithmus zur Ermittlung von Führungsgrößen für die Komponenten einer Kraftwerksanlage eine hohe Genauigkeit erreichbar ist. Insbesondere durch die Kombination des Genetischen Algorithmus mit einer Prozeßsimulation sind die Führungsgrößen sehr genau, zuverlässig und auch schnell, das heißt mit geringem Rechenaufwand, ermittelbar. Besonders zweckmäßig ist dabei die Unterteilung des Optimierungsmoduls in eine Grob- und in eine Feinoptimierungsstufe

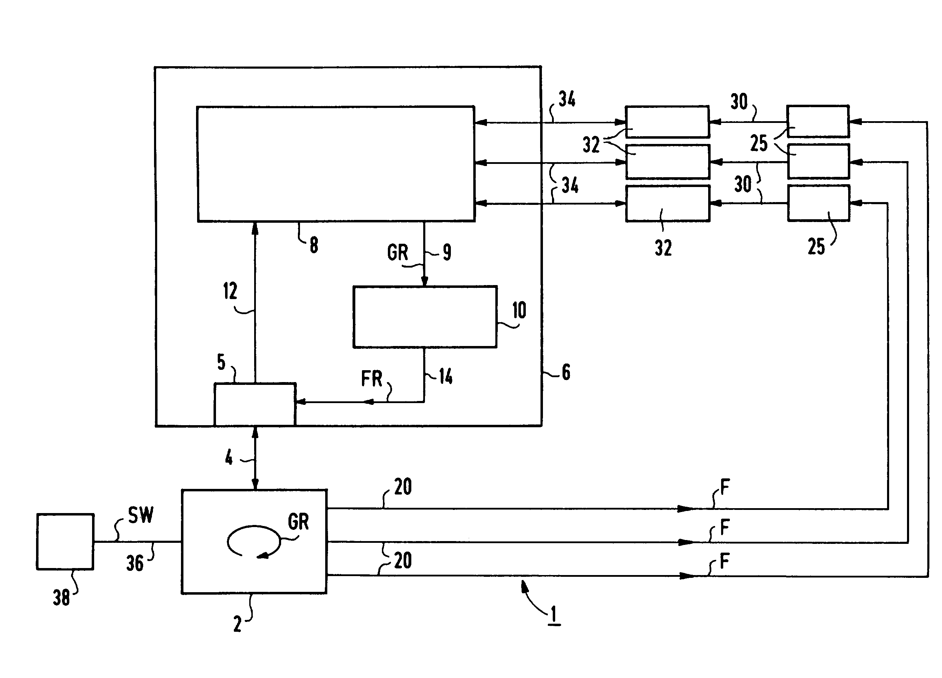

Ein Ausführungsbeispiel der Erfindung wird anhand einer Zeichnung näher erläutert. Darin zeigt die Figur schematisch ein Führungssystem für eine Kraftwerksanlage.

Das Führungssystem 1 gemäß der Figur umfaßt einen Rechnerbaustein 2, der über eine Datenleitung 4 mit einer Schnittstelle 5 eines Optimierungsmoduls 6 verbunden ist. Das Optimierungsmodul 6 umfaßt eine Groboptimierungsstufe 8 und eine mit dieser über eine Leitung 9 verbundene Feinoptimierungsstufe 10, die beide über Datenleitungen 12, 14 an die Schnittstelle 5 angeschlossen sind.

Der Rechnerbaustein 2 ist weiterhin über Datenleitungen 20 mit Kraftwerksblöcken 25 einer nicht näher dargestellten Kraftwerksanlage verbunden, von denen in der Figur drei gezeigt sind. Jeder Kraftwerksblock 25 ist über eine Datenleitung 30 mit einem ihm zugeordneten neuronalen Netz 32 verbunden, das seinerseits über eine Datenleitung 34 an die Grob-; optimierungsstufe 8 des Optimierungsmoduls 6 angeschlossen ist. Der Rechnerbaustein 2 ist zudem über eine Datenleitung 36 mit einem separaten neuronalen Netz 38 verbunden.

Bei einem Betrieb der Kraftwerksanlage werden die Kraftwerksblöcke 25 gesteuert, indem jedem Kraftwerksblock 25 von dem Führungssystem 1 über die Datenleitungen 20 als Führungsgröße F ein Soll-Lastwert oder ein Nennlastwert zugeführt wird. Alternativ können aber auch vom Führungssystem 1 ermittelte Führungsgrößen F dem Bedienpersonal der Kraftwerksanlage mitgeteilt werden, die dann als Stellgrößen manuell an die Kraftwerksblöcke 25 weitergeleitet werden. Die Soll-Lastwerte unterliegen dabei der Nebenbedingung, daß ihre Summe gleich einer von einem Verbraucher angeforderten Gesamtlast sein soll. Der Soll-Lastwert oder die Nennlast eines Kraftwerksblocks kann eine elektrische Leistung, Heizleistung und/oder Prozeßdampf sein. Für einen wirtschaftlichen Betrieb der Kraftwerksanlage sollen die Kraftwerksblöcke 25 so gesteuert werden, daß ihr gesamter Brennstoffverbrauch so gering wie möglich ist.

Die jedem Kraftwerksblock 25 zuzuführende Führungsgröße F wird vom Führungssystem 1 durch eine Optimierung mittels eines Genetischen Algorithmus ermittelt. Dabei wird ein den Schaltzustand "EIN" oder "AUS" jedes Kraftwerksblocks 25 als Funktion eines Zeitintervalls beschreibender Einsatzplan als Individuum interpretiert. Ein Planungszeitraum, beispielsweise ein Tag, wird in eine Anzahl von Zeitintervallen, beispielsweise Stunden, unterteilt, in denen die Nennlast jedes Kraftwerksblocks 25 jeweils konstant ist. Der Einsatzplan wird im Rechnerbaustein 2 in Form einer Matrix analysiert, deren Zeilen jeweils einem Kraftwerksblock 25 und deren Spalten jeweils einem Zeitintervall zugeordnet sind.

Die Matrix von EIN/AUS-Schaltungen für die einzelnen Kraftwerksblöcke 25 dient als genetischer Code des Einsatzplan-Individuums. Der Rechnerbaustein 2 übermittelt für jedes Zeitintervall des Einsatzplan-Individuums den Schaltzustand "EIN" oder "AUS" jedes Kraftwerksblocks 25 über die Schnittstelle 5 an das Optimierungsmodul 6.

Das Optimierungsmodul 6 ermittelt sodann diejenige Aufteilung einer vorgegebenen Nennlast auf die Kraftwerksblöcke 25 mit Schaltzustand "EIN", bei der die geringste thermische Gesamtleistung zuzuführen ist. Dazu wird in der Groboptimierungsstufe 8 zunächst eine Groboptimierung auf der Grundlage eines an sich bekannten Optimierungsalgorithmus durchgeführt. Dabei simuliert jedes mit der Groboptimierungsstufe 8 verbundene neuronale Netz 32 das Verhalten des ihm zugeordneten Kraftwerksblocks 25. Als neuronale Architektur liegt ein mehrschichtiges Backpropagation-Perzeptron zugrunde. Darüber hinaus können jedem neuronalen Netz 32 über die Datenleitungen 30 Meßgrößen M zugeführt werden, die den aktuellen Zustand des diesem zugeordneten Kraftwerksblocks 25 charakterisieren. Weiterhin können mittels dieser neuronalen Netze 32 auch die Ergebnisse früherer Simulationen berücksichtigt werden.

Resultate GR dieser Groboptimierung werden über die Datenleitung 9 an die Feinoptimierungsstufe 10 übergeben. In der Feinoptimierungsstufe 10 werden diese Resultate GR durch eine analytische Prozeßsimulation feinoptimiert, wobei insbesondere auch nichtlineare Korrelationen zwischen relevanten Prozeßparametern, wie beispielsweise elektrische Leistung, Fernwärmeleistung, Prozeßdampf-Massenstrom und zuzuführende thermische Leistung, berücksichtigt werden. Die somit in der Art einer Momentan-Optimierung erhaltenen Resultate FR werden der Schnittstelle 5 zugeführt und von dort an den Rechnerbaustein 2 übergeben.

Im Rechnerbaustein 2 wird anhand der Resultate FR für jedes Zeitintervall eines Einsatzplan-Individuums die Fitneß dieses Einsatzplan-Individuums bewertet, wobei insbesondere auch Korrelationen zwischen benachbarten Zeitintervallen berücksichtigt werden. Dazu kann beispielsweise die jedem Kraft; werksblock 25 zuzuführende thermische Leistung über jedes Zeitintervall summiert werden. Weiterhin wird zusätzlich bereitzustellende thermische Leistung, beispielsweise für das An- oder Abfahren eines Kraftwerksblocks oder für Wirkungsgradverluste aufgrund sonstiger Randbedingungen, gesondert berücksichtigt. Bei der Initialisierung einer Population von Einsatzplänen und bei der Auswahl von Individuen zur Rekombination sowie bei der Ersetzung einer alten Generation von Individuen durch eine neue werden Standardverfahren eines Genetischen Algorithmus eingesetzt. Die Abfolge von Iterationsschritten des Genetischen Algorithmus ist durch den Pfeil GA angedeutet. Nebenbedingungen, wie beispielsweise die gesamte, von der Kraftwerksanlage abzugebende elektrische Leistung, das heißt die Summe der von den Kraftwerksblöcken 25 abzugebenden elektrischen Leistungen, sind dabei ebenfalls berücksichtigt.

Die Ergebnisse der Ermittlung der Führungsgrößen F für die Kraftwerksblöcke 25 für vorgebbare Gesamtleistungen der Kraftwerksanlage werden zusätzlich über die Datenleitung 36 an das neuronale Netz 38 übergeben und dort hinterlegt. Bei einer neuerlichen Ermittlung von Führungsgrößen F für die Kraftwerksblöcke 25 werden diese Informationen zur Generierung besonders günstiger Startwerte SW herangezogen, die über die Datenleitung 36 zur Initialisierung des Genetischen Algorithmus an den Rechnerbaustein 2 übergeben werden. Auf diese Weise sind früher gewonnene Ergebnisse nutzbar, so daß Rechenzeit eingespart wird.

Zudem sind im Führungssystem 1 die Führungsgrößen F für jeden Kraftwerksblock 25 auch unter Berücksichtigung einer Vielzahl von Randbedingungen mit besonders geringem Rechenaufwand ermittelbar. Erst dadurch ist die Ermittlung der Führungsgrößen F in derart kurzer Zeit ermöglicht, daß ein aktueller Anlagenzustand berücksichtigt werden kann.

## Patentansprüche

1. Führungssystem für eine Kraftwerksanlage mit eine Anzahl von Kraftwerksblöcken (25), umfassend einen Rechnerbaustein (2), der mittels eines Genetischen Algorithmus Führungsgrößen (F) für den oder jeden Kraftwerksblock (25) ermittelt, und ein mit dem Rechnerbaustein (2) verbundenes Optimierungsmodul (6), das mit einer Anzahl von neuronalen Netzen (32) verbunden ist, wobei jedem Kraftwerksblock (25) ein neuronales Netz (32) zugeordnet ist.

2. Führungssystem nach Anspruch 1,
**dadurch gekennzeichnet**, daß der Rechnerbaustein (2) als Führungsgröße (F) für jeden Kraftwerksblock (25) für ein vorgebbares Zeitintervall einen Sollwert für dessen Leistungsanteil an einer insgesamt abzudeckenden Nennlast bestimmt.

3. Führungssystem nach Anspruch 1 oder 2,
**dadurch gekennzeichnet**, daß das Optimierungsmodul (6) eine mit den neuronalen Netzen (32) verbundene Groboptimierungsstufe (8) und eine Feinoptimierungsstufe (10) umfaßt.

4. Führungssystem nach Anspruch 3,
**dadurch gekennzeichnet**, daß die Feinoptimierungsstufe (10) zur Durchführung einer analytischen Prozeßsimulation ausgelegt ist.

5. Führungssystem nach einem der Ansprüche 1 bis 4,
**gekennzeichnet durch** ein neuronales Netz (38) zur Generierung von Startwerten (SW) für den Genetischen Algorithmus.

## Claims

1. Management system for a power station installation having a number of power station blocks (25), comprising a computer unit (2) which determines reference variables (F) for the power station block (25) or for each of the power station blocks (25) by means of a genetic algorithm, and comprising an optimization module (6) which is connected to the computer unit (2) and also to a number of neural networks (32), one neural network (32) being assigned to each power station block (25).

2. Management system according to Claim 1, characterized in that the computer unit (2) determines, as reference variable (F) for each power station block (25) for a predefinable time interval, a set point for its proportion of the power for an overall nominal load to be covered.

3. Management system according to Claim 1 or 2, characterized in that the optimization module (6) comprises a coarse optimization stage (8) connected to the neural networks (32) and a fine optimization stage (10).

4. Management system according to Claim 3, characterized in that the fine optimization stage (10) is designed to carry out an analytical process simulation.

5. Management system according to one of Claims 1 to 4, characterized by a neural network (38) for the generation of starting values (SW) for the genetic algorithm.

## Revendications

1. Système de commande pour une centrale électrique comportant un certain nombre de blocs générateurs (25), comprenant un module de calcul (2), qui détermine au moyen d'un algorithme génétique des grandeurs de commande (F) pour le ou pour chaque bloc générateur (25), et un module d'optimisation (6), qui est relié au module de calcul (2) et à un certain nombre de réseaux neuronaux (32), un réseau neuronal (32) étant associé à chaque bloc générateur (25).

2. Système de commande selon la revendication 1,
caractérisé par le fait que le module de calcul (2) détermine comme grandeur de commande (F) destinée à chaque bloc générateur (25) pour un intervalle de temps pouvant être prescrit une valeur de consigne donnant sa part de puissance dans la charge nominale totale à couvrir.

3. Système de commande selon la revendication 1 ou 2,
caractérisé par le fait que le module d'optimisation (6) comprend un étage d'optimisation approximative (8) relié aux réseaux neuronaux (32) et un étage d'optimisation précise (10).

4. Système de commande selon la revendication 3,
caractérisé par le fait que l'étage d'optimisation précise (10) est conçu pour la mise en oeuvre d'une simulation analytique du processus.

5. Système de commande selon l'une des revendications 1 à 4,
caractérisé par un réseau neuronal (38) destiné à la production de valeurs initiales (SW) pour l'algorithme génétique.
